# EUROPEAN PATENT SPECIFICATION

(11) **EP 3 000 540 B1**
(45) Date of publication and mention of the grant of the patent: **27.11.2019**
(21) Application number: 13885172.0
(22) Date of filing: 20.05.2013
(51) Int. Cl.: B21C 37/08, B23K 26/044, B23K 26/262, B23K 37/053, B23K 9/025

(54) **OFFSET CORRECTION CONTROL DEVICE AND OFFSET CORRECTION CONTROL METHOD FOR CONTINUOUS TACK WELDING DEVICE**
OFFSET-KORREKTURSTEUERUNGSVORRICHTUNG UND OFFSET-KORREKTURSTEUERUNGSVERFAHREN FÜR EINE KONTINUIERLICHE HEFTSCHWEISSVORRICHTUNG
DISPOSITIF ET PROCÉDÉ DE COMMANDE DE CORRECTION DE DÉCALAGE POUR DISPOSITIF DE SOUDURE DE POINTAGE EN CONTINU

(43) Date of publication of application: 30.03.2016
(73) Proprietor: JFE Steel Corporation, Tokyo, 100-0011 (JP)
(72) Inventor: TAMURA, Yukuya, Tokyo 100-0011 (JP); WADA, Norio, Tokyo 100-0011 (JP)
(74) Representative: Grünecker Patent- und Rechtsanwälte PartG mbB
(86) International application number: PCT/JP2013/063944
(87) International publication number: WO 2014/188485

(56) References cited:
- JP-A- H07 243 829
- JP-A- S62 197 299
- JP-U- H05 211
- US-A- 2 766 368
- US-A- 4 827 099
- US-A- 4 827 099

## Description

### Field

The present invention relates to an offset correction controller and an offset correction control method in a continuous tack welding machine that constrains a cylindrical steel plate from an outer periphery side using a plurality of cage rolls, butts edges in a width direction of the steel plate, and performs continuous tack welding.

### Background

Generally, a manufacturing process of a UOE steel pipe includes: a process in which edges in the width direction of a thick steel plate serving as a raw material are subjected to edge milling, a forming process in which the edges in the width direction of the thick steel plate are subjected to edge bending using a C-press machine and thereafter the thick steel plate is formed in a cylindrical shape in such a manner that the edges in the width direction of the thick steel plate face each other using a U-press machine and an O-press machine, a tack welding process in which the edges facing each other in the width direction are butted and the butted portion is tack welded while the cylindrical thick steel plate is constrained, a permanent welding process in which inner and outer surfaces of the butted portion of the thick steel plate are seam welded by a submerged arc welding method, and a pipe expanding process in which the steel pipe is expanded from the inside thereof using a pipe expander to form the steel pipe having a certain roundness, straightness, and outer diameter.

The tack welding process in the manufacturing process of the UOE steel pipe uses a continuous tack welding machine that continuously performs tack welding on the cylindrical thick steel plate while conveying the thick steel plate and constraining the thick steel plate by the multiple cage rolls before the conveyance to the welding machine. The continuous tack welding machine is required to perform the tack welding such that the butted portion of the thick steel plate does not produce a level difference (hereinafter, described as an offset) of more than a permissible amount in the butted portion of the thick steel plate taking into consideration influence on a dimensional specification of the steel pipe and quality of the permanent welding process. In view of such a background, in Patent Literature 1, a technique is proposed that detects an offset amount of a butted portion and controls constraining forces of a plurality of cage rolls such that the offset amount becomes smaller than a permissible amount.

### Citation List

### Patent Literature

Patent Literature 1: Japanese Patent Application Laid-open No. H05-211
Patent Literature 2: US Patent 4 827 099 (basis for the preamble of claims 1 and 4)

### Summary

### Technical Problem

The constraining force required to constrain the cylindrical thick steel plate by the multiple cage rolls changes depending on the outer diameter and the thickness of the thick steel plate. The technique described in Patent Literature 1, however, controls the straining forces of the multiple cage rolls without taking into consideration the outer diameter and the thickness of the thick steel plate. The technique described in Patent Literature 1 thus causes the constraining forces of the multiple cage rolls to be excessively larger than the constraining force appropriate for the outer diameter and the thickness of the thick steel plate, resulting in a friction force between the edges in the width direction being increased, thereby making it impossible to correct the offset in some cases. In view of such a background, techniques have been expected that can correct the offset of the butted portion taking into consideration the outer diameter and the thickness of the thick steel plate.

In view of such a problem, the present invention is made and aims to provide a continuous tack welding machine and an offset correction control method that can correct the offset of the butted area taking into consideration the outer diameter and the thickness of a steel plate, in a continuous tack welding machine.

### Solution to Problem

A continuous cylindrical steel plate from an outer periphery side using a plurality of cage rolls, butts edges in a width direction of the steel plate, performs continuous tack welding and includes: a detection unit that detects an offset amount between the edges in the width direction at a butted portion of the steel plate; and an offset correction control unit that adjusts constraining forces of the cage rolls arranged on both sides of the butted portion such that the offset amount becomes smaller than a certain value when the offset amount detected by the detection unit is equal to or larger than the certain value, and reduces the constraining forces of other cage rolls when the offset amount does not become smaller than the certain value after the adjustment of the constraining forces of the cage rolls arranged on both sides of the butted portion.

The offset correction controller in the continuous tack welding machine according to the present invention includes a table indicating a relation between an outer diameter and a thickness of the steel plate and upper limit values of the constraining forces of the cage rolls; reads, from the table, the upper limit values of the constraining forces of the cage rolls corresponding to the outer diameter and the thickness of the steel plate to be processed; and reduces the constraining forces of other cage rolls to the read upper limit values.

The offset correction controller in the continuous tack welding machine according to the present invention adjusts the constraining forces of the cage rolls arranged on both sides of the butted portion such that the offset amount becomes smaller than the certain value when the offset amount detected by the detection unit continues to be equal to or larger than a certain value for a certain period of time or longer.

An offset correction control method in a continuous tack welding machine according to the present invention is defined in claim 4, and constrains
a cylindrical steel plate from an outer periphery side using a plurality of cage rolls, butts edges in a width direction of the steel plate, and performs continuous tack welding. The offset correction control method includes: detecting an offset amount between the edges in the width direction at a butted portion of the steel plate; and adjusting constraining forces of the cage rolls arranged on both sides of the butted portion such that the offset amount becomes smaller than a certain value when the offset amount detected at the detecting is equal to or larger than the certain value, and reducing the constraining forces of other cage rolls when the offset amount does not become smaller than the certain value after the adjusting of the constraining forces of the cage rolls arranged on both sides of the butted portion.

### Advantageous Effects of Invention

The offset correction controller and the offset correction control method in the continuous tack welding machine according to the present invention can correct the offset of the butted portion taking into consideration the outer diameter and the thickness of the steel plate.

### Brief Description of Drawings

FIG. 1 is a schematic diagram illustrating a structure of a continuous tack welding machine to which an offset correction controller according to an embodiment of the present invention is applied.
FIG. 2 is a schematic diagram illustrating a structure of a constraining device illustrated in FIG. 1.
FIG. 3 is a schematic diagram for explaining an offset amount of a butted portion.
FIG. 4 is a block diagram illustrating a structure of the offset correction controller in the embodiment of the present invention.
FIG. 5 is a schematic diagram illustrating an arrangement position of a laser sensor illustrated in FIG. 4.
FIG. 6 is a schematic diagram illustrating an offset correction constraining force table illustrated in FIG. 4.
FIG. 7 is a flowchart illustrating the procedure of offset correction control processing in the embodiment of the present invention.

### Description of Embodiments

The following describes a structure and operation of an offset correction controller in a continuous tack welding machine in an embodiment of the present invention with reference to the accompanying drawings.

### [Structure of continuous tack welding machine]

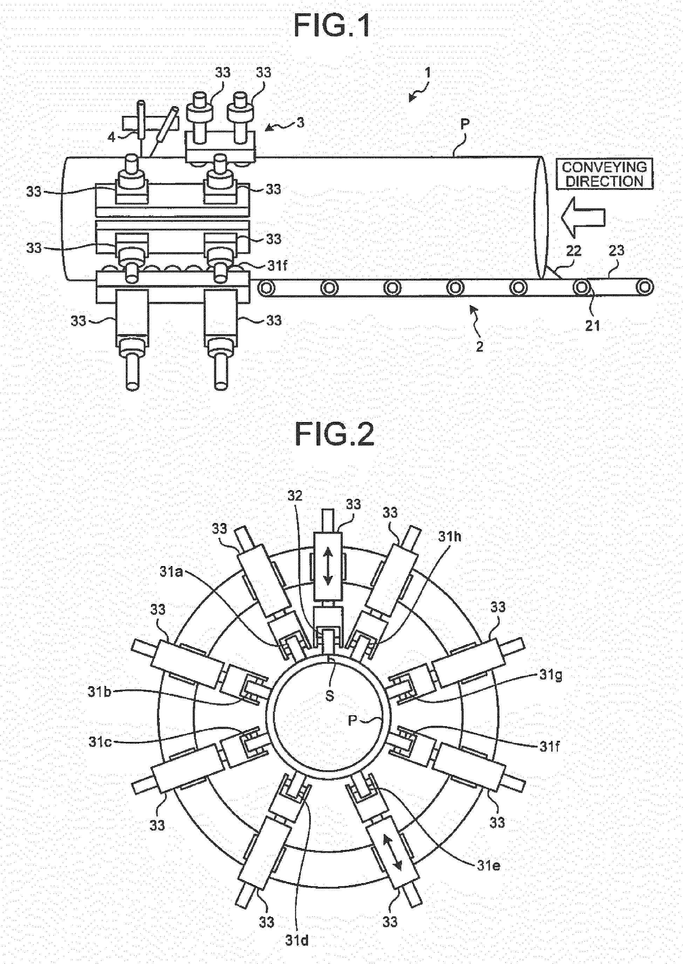

First, with reference to FIGS. 1 and 2, a structure of a continuous tack welding machine to which an offset correction controller in the embodiment of the present invention is applied is described. FIG. 1 is a schematic diagram illustrating the continuous tack welding machine to which the offset correction controller according to the embodiment of the present invention is applied. FIG. 2 is a schematic diagram illustrating a structure of a constraining device illustrated in FIG. 1.

As illustrated in FIG. 1, a continuous tack welding machine 1, to which the offset correction controller in the embodiment of the present invention is applied, includes a conveyer 2, a constraining device 3, and a tack welding torch 4 as major components.

The conveyer 2 includes a chain (dock chain) 23 that has a claw 22 and is stretched between a plurality of rolls 21 arranged in a conveying direction of a steel pipe P. The conveyer 2 conveys the steel pipe P in the conveying direction by rotating the chain 23 while catching the rear end lower portion of the steel pipe P with the claw 22.

The constraining device 3 constrains the steel pipe P from the outer peripheral side when a butted portion S of the steel pipe is tack welded. Specifically, as illustrated in FIG. 2, the constraining device 3 includes 8 cage rolls 31a to 31h circumferentially arranged such that the cage rolls constrain the steel pipe P from the outer peripheral side and a seam guiding roll 32 that forcibly guides the butted portion S of the steel pipe from straight above. The cage rolls 31a to 31h and the seam guiding rolls 32 are arranged in line along the longitudinal direction of the steel pipe P.

The cage rolls 31a to 31h and the seam guiding rolls 32 are provided with hydraulic cylinders 33 each individually adjusting the corresponding press down stroke in the corresponding radial direction of the steel pipe P. The respective constraining forces of the steel pipe P can be automatically controlled by adjusting the respective press down strokes in the radial directions of the steel pipe P of the cage rolls 31a to 31h and the seam guiding rolls 32 using the respective hydraulic cylinders 33.

The tack welding torch 4 includes an arc welder or a laser beam welder. The tack welding torch 4 tack welds the butted portion S of the steel pipe P constrained by the constraining device 3.

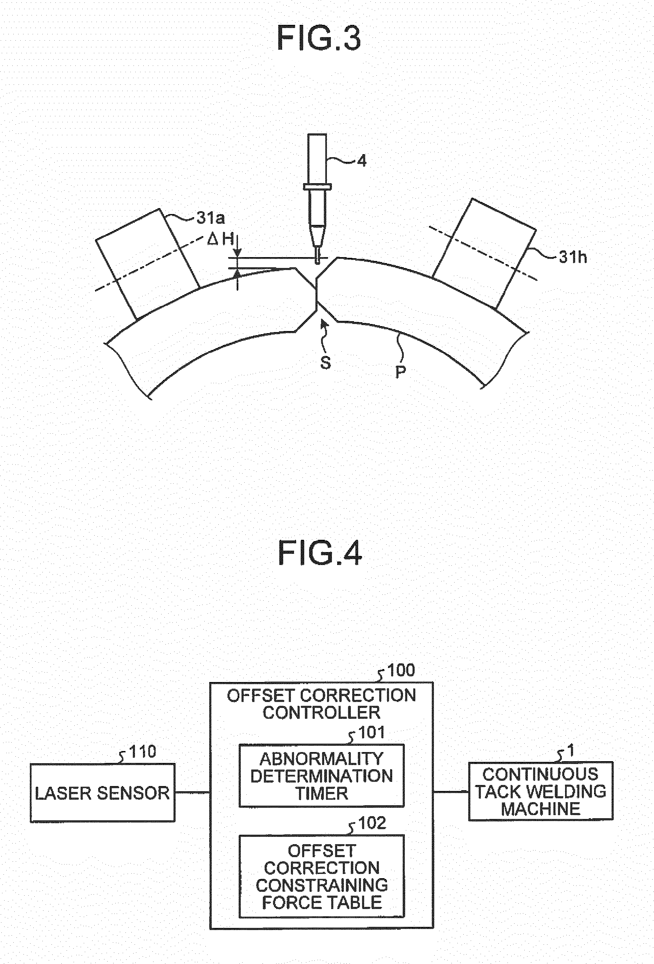

The continuous tack welding machine 1 thus structured is required to perform the tack welding such that an offset amount ΔH (refer to FIG. 3) of the butted portion S of the steel pipe P becomes smaller than a permissible amount taking into consideration influence on a dimensional specification of the steel pipe P and quality of the permanent welding process, for example. The offset correction controller in the embodiment of the present invention controls the tack welding process in such a manner as described below. The following describes a structure and operation of the offset correction controller in the embodiment of the present invention with reference to FIGS. 4 to 7.

### [Structure of offset correction controller]

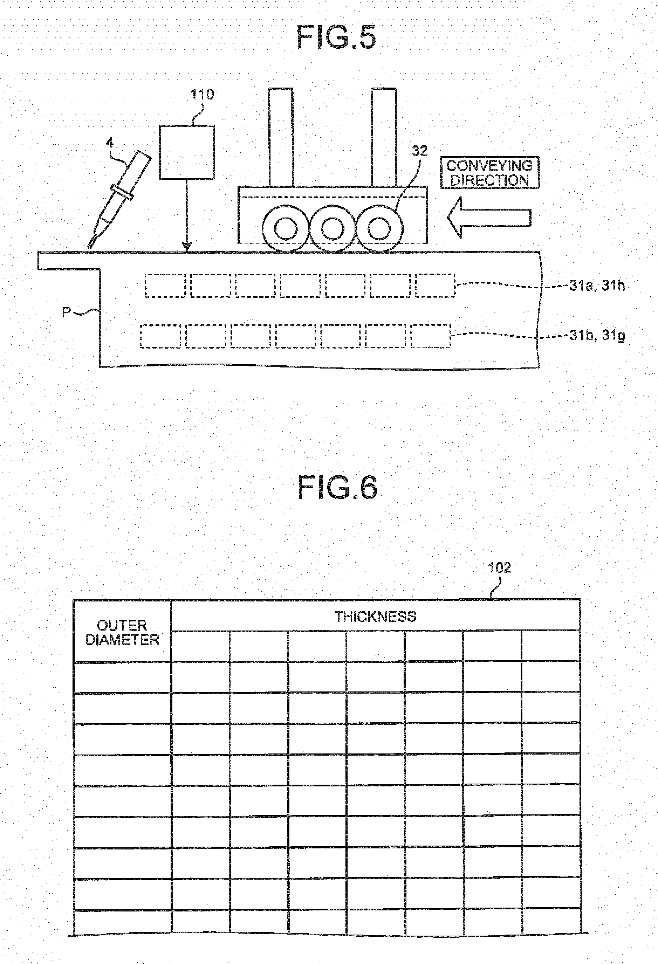

First, the structure of the offset correction controller in the embodiment of the present invention is described with reference to FIGS. 4 to 6. FIG. 4 is a block diagram illustrating the structure of the offset correction controller in the embodiment of the present invention. FIG. 5 is a schematic diagram illustrating an arrangement position of a laser sensor illustrated in FIG. 4. FIG. 6 is a schematic diagram illustrating an offset correction constraining force table illustrated in FIG. 4.

As illustrated in FIG. 4, an offset correction controller 100 in the embodiment of the present invention is achieved by an information processing apparatus such as a personal computer, and is electrically connected to a laser sensor 110 and the continuous tack welding machine 1 illustrated in FIG. 1.

As illustrated in FIG. 5, the laser sensor 110 is disposed between the seam guiding rolls 32 and the tack welding torch 4 and continuously detects the offset amount ΔH of the butted portion S. The laser sensor 110 inputs an electrical signal indicating the detected offset amount ΔH to the offset correction controller 100. It is preferable that an optical filter and a douser be disposed around the laser sensor 110 in order to prevent influence of ambient light due to the tack welding during the detection of the offset amount ΔH.

Referring back to FIG. 4, the offset correction controller 100 includes an abnormality determination timer 101 and an offset correction constraining force table 102. The abnormality determination timer 101 measures a period of time in which the offset amount ΔH is equal to or larger than an abnormality determination value (e.g., 1.0 mm). The abnormality determination timer 101 starts measuring time at a timing when the offset amount ΔH is equal to or larger than the abnormality determination value and ends the measurement of time at a timing when the offset amount ΔH becomes smaller than the abnormality determination value. As illustrated in FIG. 6, the offset correction constraining force table 102 indicates setting values (< initial values) of constraining forces of the cage rollers 31b, 31c, 31f, and 31g applied on the steel pipe P, which forces are specified for each outer diameter and thickness of the steel pipe P, used in a case where the offset amount ΔH of the butted portion S of the steel pipe P does not become smaller than the abnormality determination value.

### [Offset correction control processing]

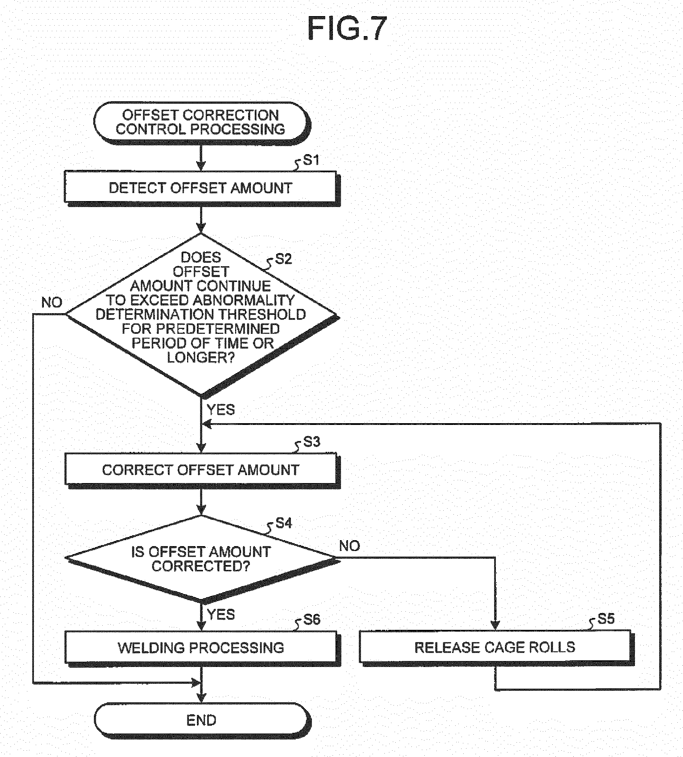

The following describes the procedure of offset correction control processing in the embodiment of the present invention with reference to FIG. 7.

FIG. 7 is a flowchart illustrating the procedure of the offset correction control processing in the embodiment of the present invention. In the flowchart illustrated in FIG. 7, the processing starts at a timing when an instruction to perform tack welding is input and the offset correction control processing proceeds to the processing at step S1. The offset correction control processing is repeated at a certain control period while the tack welding is performed.

In the processing at step S1, the offset correction controller 100 detects the offset amount ΔH of the butted portion S through the laser sensor 110. The processing at step S1 is completed, and the offset correction control processing proceeds to the processing at step S2.

In the processing at step S2, the offset correction controller 100 determines whether the offset amount ΔH continues to exceed the abnormality determination value for a certain period of time (e.g., 0.5 seconds) or longer on the basis of the time measured by the abnormality determination timer 101. If the offset amount ΔH does not continue to exceed the abnormality determination value for the certain period of time or longer as the determination result, the offset correction controller 100 ends the offset correction control processing. If the offset amount ΔH continues to exceed the abnormality determination value for the certain period of time or longer, the offset correction control processing of the offset correction controller 100 proceeds to the processing at step S3. When the offset amount detected by the processing at step S1 exceeds an abnormality upper limit determination value (e.g., 1.8 mm), the offset correction controller 100 may control the continuous tack welding machine 1 such that the continuous tack welding machine 1 stops the tack welding.

In the processing at step S3 and according to the present invention, the offset correction controller 100 adjusts the constraining forces of the cage rolls 31a and 31h, which are arranged such that the butted portion S is interposed therebetween, relatively to each other such that the offset amount ΔH detected by the processing at step S1 becomes smaller than the abnormality determination value. The processing at step S3 is completed, and the offset correction control processing proceeds to the processing at step S4.

In the processing at step S4, the offset correction controller 100 detects the offset amount ΔH after the processing at step S3 through the laser sensor 110 and determines whether the offset amount ΔH is smaller than the abnormality determination value. If the offset amount ΔH is not smaller than the abnormality determination value as the result of the determination, the offset correction controller 100 determines that the straining forces of the cage rolls 31b, 31c, 31f, and 31g are excessively large and then the offset correction control processing of the offset correction controller 100 proceeds to the processing at step S5. If the offset amount ΔH is smaller than the abnormality determination value, the offset correction control processing of the offset correction controller 100 proceeds to the processing at step S6.

In the processing at step S5, the offset correction controller 100 reads, from the offset correction constraining force table 102, the setting values of the constraining forces that correspond to the outer diameter and the thickness of the steel pipe P and are to be used in a case where the offset amount ΔH of the butted portion S does not become smaller than the abnormality determination value, and reduces the constraining forces of the cage rolls 31b, 31c, 31f, and 31g to the read setting values from the initial values. The processing at step S5 is completed, and the offset correction control processing returns to the processing at step S3.

In the processing at step S6, the offset correction controller 100 controls the continuous tack welding machine 1 such that the continuous tack welding machine 1 welds the butted portion S of the steel pipe P. The processing at step S6 is completed, and thus the series of steps of the offset correction control processing end.

As apparent from the above description, in the offset correction control processing in the embodiment of the present invention, when the offset amount ΔH of the butted portion S continues to exceed the abnormality determination value for the certain period of time or longer, the offset correction controller 100 adjusts the constraining forces of the cage rolls 31a and 31h, which are arranged such that the butted portion S is interposed therebetween, such that the offset amount ΔH becomes smaller than the abnormality determination value. When the offset amount ΔH does not become smaller than the abnormality determination value after the adjustment of the constraining forces of the cage rolls 31a and 31h, which are arranged such that the butted portion S is interposed therebetween, the offset correction controller 100 reduces the constraining forces of the cage rolls 31b, 31c, 31f, and 31g. As a result, the offset amount ΔH of the butted portion S can be corrected taking into consideration the outer diameter and the thickness of the steel plate.

The embodiment to which the invention made by the inventors is applied has been described above. The invention is not limited by the description and the drawings, which constitute the disclosure of the invention, of the embodiment. In the embodiment, for example, the constraining forces of the cage rolls 31b, 31c, 31f, and 31g are automatically adjusted when the offset amount ΔH of the butted portion S continues to exceed the abnormality determination value for the certain period of time or longer. Preferably, however, welding operation is temporarily stopped, the constraining forces of the cage rolls 31b, 31c, 31f, and 31g are adjusted, and thereafter the welding operation is restarted in a case where it is difficult to automatically adjust the constraining forces of the cage rolls 31b, 31c, 31f, and 31g, when the constraining forces of the cage rolls 31b, 31c, 31f, and 31g are adjusted using relief valves (which are open when pressure of a certain value or more is applied to keep the certain pressure), for example. The procedure can achieve the same effect as when the constraining forces of the cage rolls 31b, 31c, 31f, and 31g are automatically adjusted. The technique of the present invention can be applied to the tack welding process when a bending press method is used instead of the method in which the U forming and the O forming are performed using the U-press machine and the O-press machine in the forming process in which the thick steel plate is formed in a cylindrical shape such that the edges in the width direction of the thick steel plate face each other. In the bending press method, the thick steel plate is placed on two dies that have a straight line shape and are arranged in parallel with each other with a certain space left therebetween, and a portion above the space of the thick steel plate is pressed down by a punch. In this way, other embodiments, examples, and operation techniques carried out by persons skilled in the art on the basis of the embodiment are all included in the scope of the invention.

### Industrial Applicability

The present invention can correct the offset of the butted portion taking into consideration the outer diameter and the thickness of the steel plate.

### Reference Signs List

- 1: continuous tack welding machine
- 2: conveyer
- 3: constraining device
- 4: tack welding torch
- 21: rolls
- 22: claw
- 23: chain (dock chain)
- 31a to 31h: cage roll
- 32: seam guiding roll
- 33: hydraulic cylinders
- 100: offset correction controller
- 110: laser sensor
- 101: abnormality determination timer
- 102: offset correction constraining force table
- P: steel pipe
- S: butted portion

## Claims

1. A continuous tack welding machine (1) that constrains a cylindrical steel plate (P) from an outer periphery side using a plurality of cage rolls (31a, 31h), butts edges in a width direction of the steel plate, and performs continuous tack welding, comprising an offset correction controller (100), the offset correction controller comprising:
a detection unit (110) that detects an offset amount between the edges in the width direction at a butted portion (S) of the steel plate; being further **characterised by** :
a plurality of other cage rolls (31b-31g), and
an offset correction control unit that adjusts constraining forces of the two cage rolls (31a, 31h), which are arranged such that the butted portion (S) is interposed therebetween, such that the offset amount becomes smaller than a certain value when the offset amount detected by the detection unit (110) is equal to or larger than the certain value, and reduces the constraining forces of the other cage rolls (31b, 31c, 31f, 31g) when the offset amount does not become smaller than the certain value after the adjustment of the constraining forces of the cage rolls arranged on both sides of the butted portion.

2. The continuous tack welding machine according to claim 1, wherein the offset correction control unit includes a table (102) indicating a relation between an outer diameter and a thickness of the steel plate and upper limit values of the constraining forces of the cage rolls; reads, from the table, the upper limit values of the constraining forces of the cage rolls corresponding to the outer diameter and the thickness of the steel plate to be processed; and reduces the constraining forces of other cage rolls to the read upper limit values.

3. The continuous tack welding machine according to claim 1 or 2, wherein when the offset amount detected by the detection unit (110) continues to be equal to or larger than a certain value for a certain period of time or longer, the offset correction control unit adjusts the constraining forces of the two cage rolls (31a, 31h), which are arranged such that the butted portion (S) is interposed therebetween, such that the offset amount becomes smaller than the certain value.

4. An offset correction control method in a continuous tack welding machine (1) that constrains a cylindrical steel plate (P) from an outer periphery side using a plurality of cage rolls (31a, 31h), butts edges in a width direction of the steel plate, and performs continuous tack welding, the offset correction control method comprising:
detecting an offset amount between the edges in the width direction at a butted portion of the steel plate (S); and being further **characterised by** :
providing a plurality of other cage rolls (31b-31g)
adjusting constraining forces of the two cage rolls (31a, 31h), which are arranged such that the butted portion (S) is interposed therebetween, such that the offset amount becomes smaller than a certain value when the offset amount detected at the detecting is equal to or larger than the certain value, and reducing the constraining forces of the other cage rolls (31b, 31c, 31f, 31g) when the offset amount does not become smaller than the certain value after the adjusting of the constraining forces of the cage rolls arranged on both sides of the butted portion.

## Patentansprüche

1. Kontinuierliche Heftschweißmaschine (1), die eine zylindrische Stahlplatte (P) von einer Außenumfangsseite her unter Verwendung einer Vielzahl von Käfigrollen (31a, 31h) hält, gegen Kanten in einer Breitenrichtung der Stahlplatte anstößt und ein kontinuierliches Heftschweißen durchführt, wobei die kontinuierliche Heftschweißmaschine eine Versatzkorrektur-Steuereinrichtung (100) umfasst, wobei die Versatzkorrektur-Steuereinrichtung umfasst:
eine Erfassungseinheit (110), die eine Versatzgröße zwischen den Kanten in der Breitenrichtung an einem angestoßenen Teil (S) der Stahlplatte erfasst,
**gekennzeichnet durch**:
eine Vielzahl von anderen Käfigrollen (31b-31g), und
eine Versatzkorrektur-Steuereinheit, die Haltekräfte der zwei Käfigrollen (31a, 31h), die derart angeordnet sind, dass der angestoßene Teil (S) dazwischen angeordnet ist, derart einstellt, dass die Versatzgröße kleiner als ein bestimmter Wert wird, wenn die durch die Erfassungseinheit (110) erfasste Versatzgröße gleich oder größer als der bestimmte Wert ist, und die Haltekräfte der anderen Käfigrollen (31b, 31c, 31f, 31g) reduziert, wenn die Versatzgröße nach der Einstellung der Haltekräfte der auf beiden Seiten des angestoßenen Teils angeordneten Käfigrollen nicht kleiner als der bestimmte Wert wird.

2. Kontinuierliche Heftschweißmaschine nach Anspruch 1, wobei die Versatzkorrektur-Steuereinheit eine Tabelle (102) enthält, die eine Beziehung zwischen einem Außendurchmesser und einer Dicke der Stahlplatte und oberen Grenzwerten der Haltekräfte der Käfigrollen angibt, aus der Tabelle die oberen Grenzwerte der Haltekräfte der Käfigrollen in Entsprechung zu dem Außendurchmesser und der Dicke der zu verarbeitenden Stahlplatte liest und die Haltekräfte der anderen Käfigrollen zu den gelesenen oberen Grenzwerten reduziert.

3. Kontinuierliche Heftschweißmaschine nach Anspruch 1 oder 2, wobei, wenn die durch die Erfassungseinheit (110) erfasste Versatzgröße für eine bestimmte Zeitdauer gleich oder größer als ein bestimmter Wert bleibt, die Versatzkorrektur-Steuereinheit die Haltekräfte der zwei Käfigrollen (31a, 31h), die derart angeordnet sind, dass der angestoßene Teil (S) dazwischen angeordnet ist, derart einstellt, dass die Versatzgröße kleiner als der bestimmte Wert wird.

4. Versatzkorrektur-Steuerverfahren in einer kontinuierlichen Heftschweißmaschine (1), die eine zylindrische Stahlplatte (P) von einer Außenumfangsseite her unter Verwendung einer Vielzahl von Käfigrollen (31a, 31h) hält, gegen Kanten in einer Breitenrichtung der Stahlplatte anstößt und ein kontinuierliches Heftschweißen durchführt, wobei das Versatzkorrektur-Steuerverfahren umfasst:
Erfassen einer Versatzgröße zwischen den Kanten in der Breitenrichtung an einem angestoßenen Teil der Stahlplatte (S),
**gekennzeichnet durch**:
Vorsehen einer Vielzahl von anderen Käfigrollen (31b-31g),
Einstellen von Haltekräften der zwei Käfigrollen (31a, 31h), die derart angeordnet sind, dass der angestoßene Teil (S) dazwischen angeordnet ist, derart, dass die Versatzgröße kleiner als ein bestimmter Wert wird, wenn die durch das Erfassen erfasste Versatzgröße gleich oder größer als der bestimmte Wert ist, und Reduzieren der Haltekräfte der anderen Käfigrollen (31b, 31c, 31f, 31g), wenn die Versatzgröße nach dem Einstellen der Haltekräfte der auf beiden Seiten des angestoßenen Teils angeordneten Käfigrollen nicht kleiner als der bestimmte Wert wird.

## Revendications

1. Machine de soudage continu par points (1) qui contraint une plaque cylindrique d'acier (P) depuis la périphérie externe en utilisant une pluralité de rouleaux cage (31a, 31h), qui vient en butée contre des bordures dans la direction de la largeur de la plaque d'acier et effectue un soudage continu par points, comprenant un contrôleur de correction de décalage (100), le contrôleur de correction de décalage comprenant :
une unité de détection (110) qui détecte une valeur de décalage entre les bordures dans la direction de la largeur au niveau d'une partie en butée (S) de la plaque d'acier,
**caractérisé en outre par** :
une pluralité d'autres rouleaux cage (31b à 31g), et
une unité de commande de correction de décalage qui ajuste les forces de contrainte des deux rouleaux cage (31a, 31h) qui sont disposés de sorte à ce que la partie en butée (S) soit intercalée entre ceux-ci, de sorte à ce que la valeur de décalage se réduise en-deçà d'une certaine valeur lorsque la valeur de décalage détectée par l'unité de détection (110) est supérieure ou égale à la certaine valeur, et qui réduit les forces de contrainte des autres rouleaux cage (31b, 31c, 31f, 31g) lorsque la valeur de décalage ne se réduit pas en-deçà de la certaine valeur après l'ajustement des forces de contrainte des rouleaux cage disposés sur les deux côtés de la partie en butée.

2. Machine de soudage continu par points selon la revendication 1, dans laquelle l'unité de commande de correction de décalage inclut une table (102) indiquant une relation entre le diamètre externe et l'épaisseur de la plaque d'acier et les valeurs limites supérieures des forces de contrainte des rouleaux cage ; elle lit, à partir de la table, les valeurs limites supérieures des forces de contrainte des rouleaux cage correspondant au diamètre externe et à l'épaisseur de la plaque d'acier à traiter ; et elle réduit les forces de contrainte des autres rouleaux cage aux valeurs limites supérieures lues.

3. Machine de soudage continu par points selon la revendication 1 ou la revendication 2, dans laquelle, lorsque la valeur de décalage détectée par l'unité de détection (110) continue à être supérieure ou égale à une certaine valeur pendant un certain intervalle de temps ou plus, l'unité de commande de correction de décalage ajuste les forces de contrainte des deux rouleaux cage (31a, 31h), qui sont disposés de sorte à ce que la partie en butée (S) soit intercalée entre eux, de sorte à ce que la valeur de décalage se réduise en-deçà de la certaine valeur.

4. Procédé de commande de correction de décalage dans une machine de soudage continu par points (1) qui contraint une plaque cylindrique d'acier (P) depuis la périphérie externe en utilisant une pluralité de rouleaux cage (31a, 31h), vient en butée contre des bordures dans la direction de la largeur de la plaque d'acier et effectue un soudage continu par points, le procédé de commande de correction de décalage comprenant :
la détection d'une valeur de décalage entre les bordures dans la direction de la largeur au niveau d'une partie en butée (S) de la plaque d'acier, et **caractérisé en outre par** :
l'utilisation d'une pluralité d'autres rouleaux cage (31b à 31g), et
l'ajustement des forces de contrainte des deux rouleaux cage (31a, 31h) qui sont disposés de sorte à ce que la partie en butée (S) soit intercalée entre ceux-ci, de sorte à ce que la valeur de décalage se réduise en-deçà d'une certaine valeur lorsque la valeur de décalage détectée lors de la détection est supérieure ou égale à la certaine valeur, ainsi que la réduction des forces de contrainte des autres rouleaux cage (31b, 31c, 31f, 31g) lorsque la valeur de décalage ne se réduit pas en-deçà de la certaine valeur après l'ajustement des forces de contrainte des rouleaux cage disposés sur les deux côtés de la partie en butée.
